# FASCICULE DE BREVET EUROPEEN

(11) **EP 2 072 801 B1**
(45) Date de publication et mention de la délivrance du brevet: **02.11.2011**
(21) Numéro de dépôt: 08305937.8
(22) Date de dépôt: 15.12.2008
(51) Int. Cl.: F02M 55/00, F02M 55/02, F02M 55/04, F16L 55/033

(54) **Manchon d'absorption des vibrations pour un coude de tuyau d'injection**
Schwingungsdämpfende Hülse für Einspritzrohrbogen
Vibration absorption sleeve for an injection pipe curvature

(30) Priorité: 19.12.2007 FR 0708897
(43) Date de publication de la demande: 24.06.2009
(73) Titulaire: Renault s.a.s., 92100 Boulogne-Billancourt (FR)
(72) Inventeur: Bourachot, Jean-Luc, 91590, Cerny (FR); Paquien, Marc, 92190, Meudon (FR); Pourceau, Jean-Michel, 72400 La Ferte Bernard (FR)

(56) Documents cités:
- EP-A- 0 771 992
- DE-U1- 29 803 867
- JP-A- 10 030 522
- JP-A- 2002 130 077
- US-A1- 2007 163 545

## Description

La présente invention concerne un manchon de réduction des bruits d'un dispositif d'injection d'un véhicule automobile, ainsi qu'un dispositif d'injection et un véhicule automobile en tant que tels comprenant un tel manchon.

Dans l'état de la technique, il est répandu d'utiliser le principe de multi-injections à forte pression d'injection dans les moteurs diesel de véhicule automobile, dans toutes les configurations de fonctionnement de ces moteurs, afin de minimiser les rejets de matières polluantes dans l'atmosphère et d'atteindre les normes de dépollution. Cette approche permet de plus de garantir un bruit de combustion. Toutefois, chaque injection génère une onde de pression dans les tuyaux du dispositif d'injection, liée à l'ouverture et la fermeture de l'injecteur, qui entraîne des vibrations de ces tuyaux. Dans certaines situations°de résonance entre ces ondes hydrauliques et la géométrie des conduits d'injection, ce phénomène génère un bruit très particulier qui se détache des bruits de fonctionnement du moteur, dans une bande de fréquence de 500 Hz à 1500 Hz ; ce bruit est souvent dénommé bruit de « flûte de pan ».

Des solutions spécifiques ont été développées dans l'état de la technique pour tenter de supprimer l'occurrence de ces bruits de « flûte de pan ».

Le document EP1754885 décrit une solution mécanique permettant la réflexion d'ondes et l'annulation des ondes à l'origine du bruit par un phénomène d'interférence avec les nouvelles ondes générées. Cette solution est relativement complexe.

Le document US20060005812 décrit une solution qui repose sur la réduction de la pression d'injection en charge réduite du moteur afin de limiter le bruit.

Le document US 2007/163 545 décrit un manchon de réduction des bruits comprenant une fente étroite pour son clipsage sur un tuyau d'injection. Un tel manchon n'est toutefois pas adapté pour un coude et son utilisation reste limitée. Le document EP1764501 décrit une solution qui repose sur le découplage de l'injecteur et de ses pièces voisines comme la culasse et la bride, pour réduire le bruit.

Le document JP 2002 130 077 A décrit un manchon de réduction de bruit, qui comprend deux parties cylindriques, reliées entre elles par une partie intermédiaire.

Toutes ces solutions sont complexes et insatisfaisantes.

Il existe donc un besoin d'une autre solution pour réduire le bruit de « flûte de pan » d'un dispositif d'injection pour moteur de véhicule automobile.

Plus particulièrement, l'objet de l'invention est de proposer un dispositif d'injection simplifié pour moteur de véhicule automobile dans lequel les bruits de « flûte de pan » sont supprimés ou réduits.

A cet effet, l'invention repose sur un manchon de réduction des bruits émis par un tuyau d'injection de véhicule automobile, **caractérisé en ce qu'**il comprend au moins deux parties cylindriques fendues par une fente étroite, destinées à un clipsage sur un tuyau d'injection, reliées entre elles par une partie intermédiaire présentant au moins une portion étroite pour permettre sa déformation et offrir au manchon monolithique la possibilité de s'adapter sur un coude d'un tuyau, dans une configuration où les au moins deux parties cylindriques peuvent être clipsées sur deux portions non alignées d'un tuyau.

Le manchon de réduction des bruits peut comprendre deux parties latérales cylindriques symétriquement disposées autour d'une partie intermédiaire centrale. La partie centrale peut représenter une portion tronquée du cylindre des parties latérales cylindriques.

La partie centrale peut représenter une portion de cylindre réduite de manière discontinue par rapport aux parties cylindriques latérales ou une portion de cylindre réduite de manière progressive par rapport aux parties cylindriques latérales.

La partie intermédiaire peut représenter une portion tronquée du cylindre des parties cylindriques et présente au moins une portion réduite s'étendant sur moins d'un quart de la circonférence du cylindre des parties cylindriques.

Le manchon de réduction des bruits peut être dans un matériau de type élastomère ou caoutchouc ou toute autre matière ayant un coefficient de frottement important avec l'acier.

Il peut présenter une longueur approximativement égale à 30 millimètres ou comprise entre 0.6 et 1 fois la longueur développée du coude.

De plus, les parties cylindriques peuvent présenter un diamètre extérieur (De) approximativement égal à 13 millimètres ou compris entre 2 et 2,1 fois le diamètre intérieur (Di), et un diamètre intérieur (Di) approximativement égal à 6 millimètres, ou compris entre 0,9 et 1 fois le diamètre extérieur du tuyau d'injection.

L'invention porte aussi sur un dispositif d'injection pour véhicule automobile comprenant au moins un tuyau d'injection présentant au moins un coude, **caractérisé en ce qu'**il comprend au moins un manchon de réduction des bruits monté sur le coude, tel que décrit précédemment, et s'étendant de préférence sur au moins 60% de la longueur du coude. L'invention porte aussi sur un véhicule automobile comprenant un dispositif d'injection pour véhicule automobile comprenant au moins un tuyaux d'injection présentant au moins un coude, **caractérisé en ce qu'**il comprend au moins un manchon de réduction des bruits tel que décrit précédemment monté sur le coude.

Ces objets, caractéristiques et avantages de la présente invention seront exposés en détail dans la description suivante de modes d'exécution particuliers faits à titre non-limitatif en relation avec les figures jointes parmi lesquelles :
la figure 1 représente une vue de côté d'un manchon réducteur de bruit selon un premier mode d'exécution de l'invention ;
la figure 2 représente une vue en coupe II-II selon un plan transverse du manchon réducteur de bruit selon le premier mode d'exécution de l'invention ;
la figure 3 représente une vue de côté d'un coude de tuyau d'injection équipé d'un manchon réducteur de bruit selon le premier mode d'exécution de l'invention ;
la figure 4 représente une vue en coupe de côté selon un plan médian du manchon réducteur de bruit monté sur un coude de tuyau d'injection selon le premier mode d'exécution de l'invention ;
la figure 5 représente une vue de côté d'un manchon réducteur de bruit selon un second mode d'exécution de l'invention ;
la figure 6 représente une vue en coupe VI-VI selon un plan transverse du manchon réducteur de bruit selon le second mode d'exécution de l'invention ;
la figure 7 représente une vue de côté d'un coude de tuyau d'injection équipé d'un manchon réducteur de bruit selon le second mode d'exécution de l'invention ;
la figure 8 représente une vue en coupe de côté selon un plan médian du manchon réducteur de bruit monté sur un coude de tuyau d'injection selon le second mode d'exécution de l'invention.

Il a été établi qu'un tuyau d'injection se déforme sous l'effet des ondes de pression explicitées ci-dessus essentiellement au niveau des coudes, situés sur la partie centrale du tuyau. Le concept de l'invention consiste en la dissipation de l'énergie vibratoire du tuyau par friction d'un manchon fendu monté sur celui-ci au niveau d'au moins un de ces coudes. Pour cela, le manchon est dans un matériau de type élastomère ou caoutchouc ou toute autre matière ayant un coefficient de frottement important avec l'acier. Comme l'excitation à l'origine du bruit de « flûte de pan » est de faible intensité, la dissipation de l'énergie vibratoire par un tel manchon est suffisante pour atténuer ce bruit.

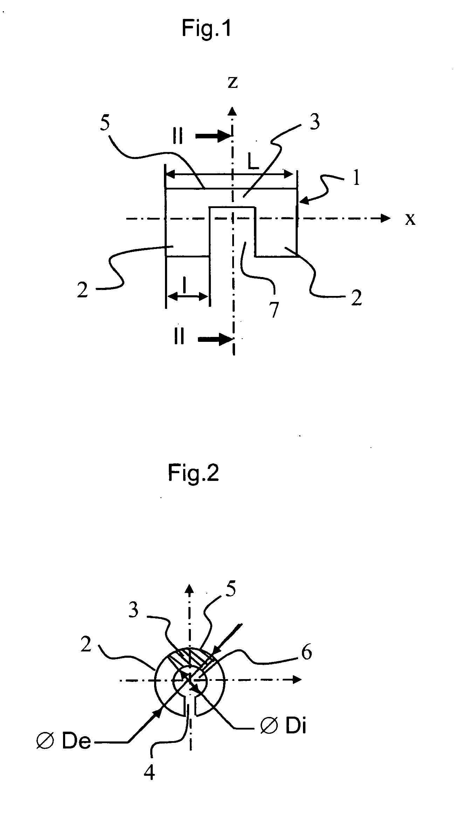

Les figures 1 et 2 présentent un manchon de réduction des bruits 1 selon un premier mode d'exécution de l'invention. Il comprend une structure correspondant à une portion de cylindre. Il comprend plus exactement deux parties latérales de mêmes dimensions 2, de forme cylindrique fendue par une fente 4 de petite dimension, symétriquement disposées autour d'une partie centrale 3. Cette partie centrale 3 se présente sous la forme d'une plus petite portion du même cylindre que les parties latérales 2, apparaît comme une troncature des parties latérales 2. Selon ce mode d'exécution, cette partie centrale 3 s'étend sur une portion de moins d'un quart de la circonférence du cylindre 2. Elle est disposée dans la partie supérieure du manchon 1 de manière symétrique autour d'un plan médian longitudinal et vertical X,Z, Ainsi, le manchon est formé d'une seule pièce et comprend une partie continue 5 dans sa partie supérieure sur toute sa longueur.

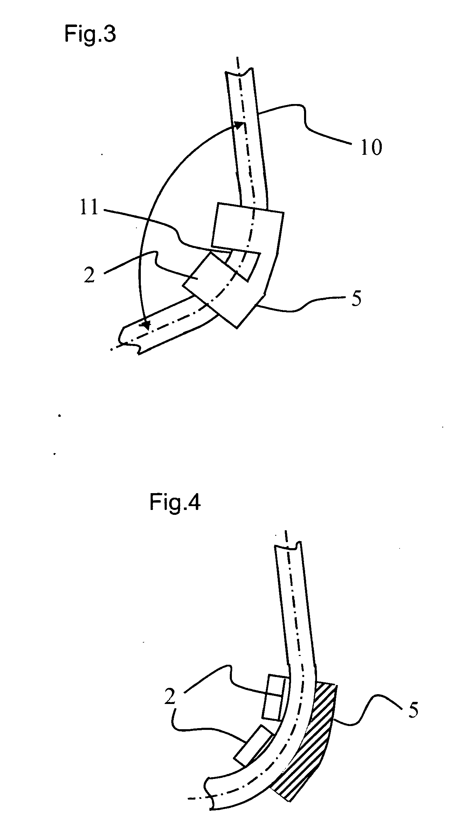

L'utilisation de ce manchon pour réduire les bruits de flûte de pan est illustrée sur les figures 3 et 4. Le manchon est positionné au niveau d'un coude 11 d'un tuyau d'injection 10 d'un moteur de véhicule automobile. Pour cela, les deux parties autour de la fente 4 de chaque partie latérale 2 sont écartées afin de laisser passer le tuyau 10 qui vient se loger dans la partie cylindrique centrale 6 du manchon. L'élasticité du matériau utilisé permet cette mise en place du manchon sur le tuyau par l'intermédiaire de la fente 4 de faible dimension. L'élasticité du matériau lui permet ensuite de reprendre sa forme initiale dans laquelle les deux parties latérales 2 du manchon entourent presque complètement le tuyau 10. Ainsi, le manchon est installé sur le tuyau 10 en clipsant de cette manière alternativement chacune de ses parties latérales 2 sur le tuyau 10. La partie centrale 3 repose sensiblement en appui sur le tuyau 10 : toutefois, elle est courbée afin de suivre la courbure du coude 11 du tuyau et de permettre à chacune des parties latérales 2 d'épouser la circonférence de deux parties du tuyau 10 qui ne sont pas alignées. Les dimensions réduites de la partie centrale 3 du manchon ainsi que le matériau utilisé lui permettent de posséder une propriété déformable et de relier deux parties latérales épousant la forme de deux parties non alignées du tuyau 10 au niveau du coude 11.

Naturellement, les dimensions du manchon 1 sont adaptées à celles du tuyau 10, de sorte de pouvoir épouser au mieux sa surface et remplir sa fonction de dissipation de l'énergie vibratoire. Pour cela, le manchon 1 peut former un cylindre partiel de diamètre extérieur De d'environ 13 millimètres et libérant un espace cylindrique intérieur de diamètre Di sensiblement égal à 6 millimètres destiné à accueillir le tuyau d'injection. Avantageusement, il comprendra un diamètre extérieur De compris entre 2 et 2,1 fois le diamètre de l'espace intérieur Di et un diamètre intérieur Di compris entre 0,9 et 1 fois le diamètre extérieur du tuyau d'injection. De plus, le manchon peut présenter une longueur totale L d'environ 30 millimètres, divisée en trois parties de même longueur 1 de 10 millimètres pour les deux parties latérales 2 et la partie centrale 3. Le manchon occupe ainsi globalement presque toute la longueur du coude 11, s'étendant presque jusqu'aux parties rectilignes de part et d'autre du coude 11. Pour cela, sa longueur pourra avantageusement être comprise entre 0,6 et 1,5 fois la longueur développée du coude 11.

Le manchon 1 ainsi positionné sur un coude du tuyau 10, au niveau de la zone de déformation maximale du tuyau, subit lui-même une forte déformation. Cela présente l'avantage d'induire une dissipation de l'énergie sous deux formes : d'abord, une première partie d'énergie est dissipée par déformation de l'élastomère et ensuite, une énergie importante est dissipée par frottement entre le manchon et le tuyau haute pression. Cette forte dissipation d'énergie entraîne une forte réduction voire suppression du bruit de tuyau de type « flûte de pan ». La majeure partie de cette dissipation se fera naturellement au niveau des parties cylindriques 2 qui entourent presque totalement le tuyau. La partie centrale ou intermédiaire entre ces parties cylindriques permet plus particulièrement un bon maintien de l'ensemble du manchon sur le coude et participe à la dissipation de l'énergie par déformation.

La solution présente de plus l'avantage d'un maintien efficace et durable du manchon sur le tuyau au niveau du coude. En effet, la mise en contrainte nécessaire à la flexion du manchon lors de sa mise en place induit un effort résultant qui empêche ensuite tout déplacement du manchon.

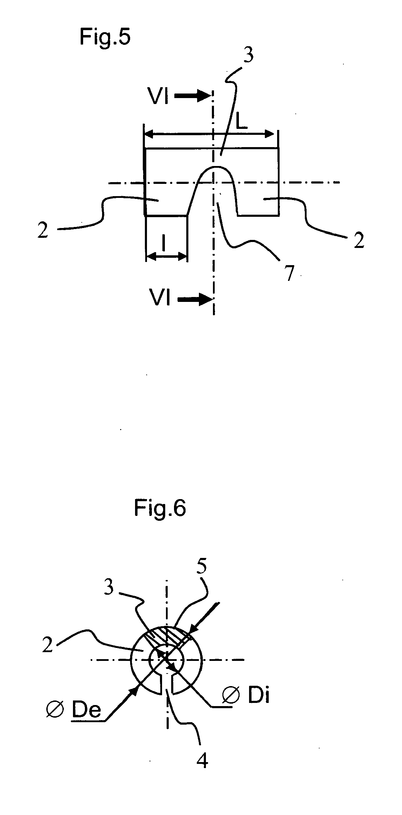

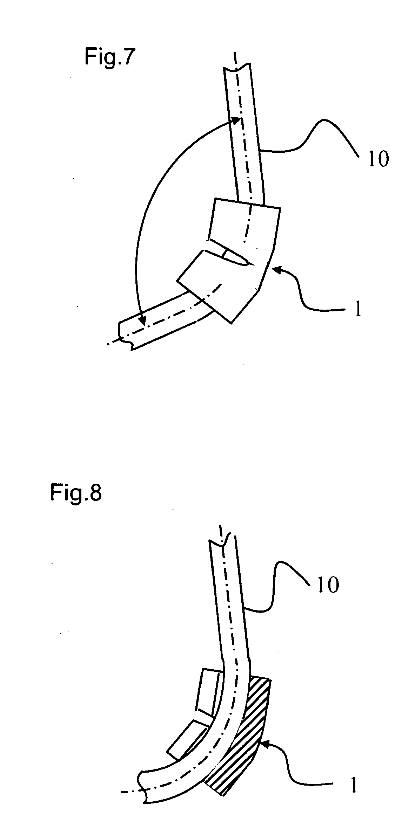

Bien entendu, l'invention n'est pas limitée à la seule réalisation décrite précédemment. Les figures 5 à 8 illustrent à ce titre un second mode d'exécution, dans lequel les éléments correspondants conservent les mêmes références, qui diffère par la forme de la partie centrale 3. En effet, la figure 1 montre que la jonction entre les parties latérales 2 et la partie centrale 3 présente une nette discontinuité, dans un plan vertical longitudinal x-z, pour former ainsi un espace vide 7 de forme carrée entre les deux parties latérales 2. Dans le second mode d'exécution, la figure 5 montre que cette jonction est réalisée par le biais de formes arrondies, qui permettent d'obtenir un espace central 7 de forme arrondie, en demi ovoïde, entre les deux parties latérales 2. La partie centrale 3 présentera ainsi une courbure équivalente à celle du premier mode d'exécution au niveau de sa partie centrale, cette courbure augmentant progressivement jusqu'à atteindre la quasi-totalité du cylindre, à l'exception de la fente 4, au niveau des parties latérales 2.

Bien entendu, l'invention n'est pas limitée aux seules réalisations décrites précédemment. Les deux parties latérales ne sont pas obligatoirement symétriques autour d'une partie centrale et cette dernière peut présenter d'autres formes. Elle aura des dimensions plus étroites représentant un bon compromis pour lui conférer une propriété de déformation permettant l'adaptation du manchon sur des coudes d'angle parfois important, tout en résistant aux contraintes subies du fait des vibrations répétées cumulées avec sa déformation sur un coude.

Il est possible d'imaginer plus de deux parties cylindriques similaires aux deux parties latérales 2 des deux modes d'exécution décrits, séparés par des parties intermédiaires similaires à la partie centrale 3. Dans tous les cas, le manchon combinera plusieurs parties cylindriques fendues par une fente étroite 4, destinées à un clipsage sur un tuyau d'injection, reliées entre elles par une partie intermédiaire présentant au moins une portion étroite pour permettre sa déformation et offrir au manchon monolithique la possibilité de s'adapter sur des coudes de tuyau. Le concept de l'invention est implémenté dès lors qu'au moins un manchon est positionné sur un coude d'un tuyau d'injection, en épousant une forme non rectiligne sur une longueur significative du coude, pour réduire le bruit de flûte de pan.

La solution peut être combinée avec un ou plusieurs manchons simplifié(s), monté(s) sur une partie droite d'un tuyau d'injection. Plus généralement, l'invention reste compatible avec d'autres solutions existantes de réduction des bruits, qui peuvent être combinées de manière complémentaire.

## Revendications

1. Manchon de réduction des bruits émis par un tuyau d'injection de véhicule automobile, **caractérisé en ce qu'**il comprend au moins deux parties cylindriques (2) fendues par une fente étroite (4), destinées à un clipsage sur un tuyau d'injection (10), reliées entre elles par une partie intermédiaire présentant au moins une portion étroite pour permettre sa déformation et offrir au manchon monolithique la possibilité de s'adapter sur un coude (11) d'un tuyau, dans une configuration où les au moins deux parties cylindriques (2) peuvent être clipsées sur deux portions non alignées d'un tuyau (10).

2. Manchon de réduction des bruits selon la revendication 1, **caractérisé en ce qu'**il comprend deux parties latérales cylindriques (2) symétriquement disposées autour d'une partie intermédiaire centrale (3).

3. Manchon de réduction des bruits selon la revendication 2, **caractérisé en ce que** la partie centrale (3) représente une portion tronquée du cylindre des parties latérales cylindriques (2).

4. Manchon de réduction des bruits selon la revendication précédente, **caractérisé en ce que** la partie centrale (3) représente une portion de cylindre réduite de manière discontinue par rapport aux parties cylindriques latérales (2) ou une portion de cylindre réduite de manière progressive par rapport aux parties cylindriques latérales (2).

5. Manchon de réduction des bruits selon l'une des revendications précédentes, **caractérisé en ce que** la partie intermédiaire (3) représente une portion tronquée du cylindre des parties cylindriques (2) et présente au moins une portion réduite s'étendant sur moins d'un quart de la circonférence du cylindre des parties cylindriques (2).

6. Manchon de réduction des bruits selon l'une des revendications précédentes, **caractérisé en ce qu'**il est dans un matériau de type élastomère ou caoutchouc ou toute autre matière ayant un coefficient de frottement important avec l'acier.

7. Manchon de réduction des bruits selon l'une des revendications précédentes, **caractérisé en ce qu'**il présente une longueur (L) approximativement égale à 30 millimètres ou comprise entre 0.6 et 1 fois la longueur développée du coude.

8. Manchon de réduction des bruits selon l'une des revendications précédentes, **caractérisé en ce que** les parties cylindriques présentent un diamètre extérieur (De) approximativement égal à 13 millimètres ou compris entre 2 et 2,1 fois le diamètre intérieur (Di), et un diamètre intérieur (Di) approximativement égal à 6 millimètres, ou compris entre 0,9 et 1 fois le diamètre extérieur du tuyau d'injection.

9. Dispositif d'injection pour véhicule automobile comprenant au moins un tuyau d'injection (10) présentant au moins un coude (11), **caractérisé en ce qu'**il comprend au moins un manchon de réduction des bruits (1) monté sur le coude (11), selon l'une des revendications précédentes et s'étendant de préférence sur au moins 60% de la longueur du coude (11).

10. Véhicule automobile comprenant un dispositif d'injection pour véhicule automobile comprenant au moins un tuyaux d'injection (10) présentant au moins un coude (11), **caractérisé en ce qu'**il comprend au moins un manchon de réduction des bruits (1) monté sur le coude (11), selon l'une des revendications 1 à 9.

## Claims

1. Sleeve for reducing the noises emitted by a motor vehicle injection pipe, **characterized in that** it comprises at least two cylindrical portions (2) split by a narrow slot (4), intended for clipping onto an injection pipe (10), connected together by an intermediate portion having at least one narrow portion in order to allow its deformation and provide the one-piece sleeve with the ability to be fitted to a bend (11) of a pipe, in a configuration in which the at least two cylindrical portions (2) can be clipped onto two unaligned portions of a pipe (10).

2. Sleeve for reducing noises according to Claim 1, **characterized in that** it comprises two cylindrical lateral portions (2) symmetrically placed around a central intermediate portion (3).

3. Sleeve for reducing noises according to Claim 2, **characterized in that** the central portion (3) represents a truncated portion of the cylinder of the lateral cylindrical portions (2).

4. Sleeve for reducing noises according to the preceding claim, **characterized in that** the central portion (3) represents a cylinder portion reduced in a discontinuous manner relative to the lateral cylindrical portions (2) or a cylinder portion reduced in a progressive manner relative to the lateral cylindrical portions (2).

5. Sleeve for reducing noises according to one of the preceding claims, **characterized in that** the intermediate portion (3) represents a truncated portion of the cylinder of the cylindrical portions (2) and has at least one reduced portion extending over at least one quarter of the circumference of the cylinder of the cylindrical portions (2).

6. Sleeve for reducing noises according to one of the preceding claims, **characterized in that** it is made of a material of the elastomer or rubber type or any other material having a considerable coefficient of friction with steel.

7. Sleeve for reducing noises according to one of the preceding claims, **characterized in that** it has a length (L) approximately equal to 30 millimetres or between 0.6 and 1 times the opened-out length of the bend.

8. Sleeve for reducing noises according to one of the preceding claims, **characterized in that** the cylindrical portions have an external diameter (De) approximately equal to 13 millimetres or between 2 and 2.1 times the internal diameter (Di), and an internal diameter (Di) approximately equal to 6 millimetres, or between 0.9 and 1 times the external diameter of the injection pipe.

9. Injection device for a motor vehicle comprising at least one injection pipe (10) having at least one bend (11), **characterized in that** it comprises at least one sleeve for reducing noises (1) mounted on the bend (11), according to one of the preceding claims and preferably extending over at least 60% of the length of the bend (11).

10. Motor vehicle comprising an injection device for a motor vehicle comprising at least one injection pipe (10) having at least one bend (11), **characterized in that** it comprises at least one sleeve for reducing noises (1) mounted on the bend (11) according to one of Claims 1 to 9.

## Patentansprüche

1. Muffe zur Reduzierung der von einem Kraftfahrzeug-Einspritzrohr abgegebenen Geräusche, **dadurch gekennzeichnet, dass** sie wenigstens zwei zylindrische Teile (2) umfasst, die durch einen schmalen Schlitz (4) geschlitzt sind und dazu vorgesehen sind, an ein Einspritzrohr (10) angeklipst zu werden, durch ein Zwischenteil verbunden sind, das wenigstens einen schmalen Abschnitt aufweist, um seine Verformung zu ermöglichen und der monolithischen Muffe die Möglichkeit zu verleihen, sich an eine Krümmung (11) des Rohrs in einer Konfiguration anzupassen, in der die wenigstens zwei zylindrischen Teile (2) an zwei nicht aufeinander ausgerichtete Abschnitte des Rohrs (10) geklipst sein können.

2. Geräuschreduzierungsmuffe nach Anspruch 1, **dadurch gekennzeichnet, dass** sie zwei zylindrische seitliche Teile (2) umfasst, die um einen mittleren Zwischenteil (3) symmetrisch angeordnet sind.

3. Geräuschreduzierungsmuffe nach Anspruch 2, **dadurch gekennzeichnet, dass** der mittlere Teil (3) einen schräg abgeschnittenen Abschnitt des Zylinders der zylindrischen seitlichen Teile (2) darstellt.

4. Geräuschreduzierungsmuffe nach dem vorhergehenden Anspruch, **dadurch gekennzeichnet, dass** der mittlere Teil (3) einen Zylinderabschnitt darstellt, der in Bezug auf die seitlichen zylindrischen Teile (2) diskontinuierlich konisch zuläuft, oder einen Zylinderabschnitt darstellt, der in Bezug auf die seitlichen zylindrischen Teile (2) progressiv konisch zuläuft.

5. Geräuschreduzierungsmuffe nach einem der vorhergehenden Ansprüche, **dadurch gekennzeichnet, dass** der Zwischenteil (3) einen schräg abgeschnittenen Abschnitt des Zylinders der zylindrischen Teile (2) darstellt und wenigstens einen konisch zulaufenden Abschnitt aufweist, der sich wenigstens über ein Viertel des Umfangs des Zylinders der zylindrischen Teile (2) erstreckt.

6. Geräuschreduzierungsmuffe nach einem der vorhergehenden Ansprüche, **dadurch gekennzeichnet, dass** er aus einem Material des Elastomer- oder Kautschuktyps oder aus irgendeinem anderen Stoff, der mit Stahl einen hohen Reibkoeffizienten besitzt, hergestellt ist.

7. Geräuschreduzierungsmuffe nach einem der vorhergehenden Ansprüche, **dadurch gekennzeichnet, dass** sie eine Länge (L) aufweist, die ungefähr gleich 30 Millimeter ist oder im Bereich der 0,6- bis 1-fachen Abwicklungslänge der Krümmung ist.

8. Geräuschreduzierungsmuffe nach einem der vorhergehenden Ansprüche, **dadurch gekennzeichnet, dass** die zylindrischen Teile einen Außendurchmesser (De) aufweisen, der ungefähr gleich 13 Millimeter beträgt oder im Bereich des 2- bis 2,1-fachen Innendurchmessers (Di) liegt, und einen Innendurchmesser (Di) aufweisen, der ungefähr gleich 6 Millimeter beträgt oder im Bereich des 0,9- bis 1-fachen Außendurchmessers des Einspritzrohrs liegt.

9. Einspritzvorrichtung für Kraftfahrzeug, die wenigstens ein Einspritzrohr (10) umfasst, das wenigstens eine Krümmung (11) aufweist, **dadurch gekennzeichnet, dass** sie wenigstens eine Geräuschreduzierungsmuffe (1) umfasst, die an der Krümmung (11) montiert ist, wie in einem der vorhergehenden Ansprüche beschaffen ist und sich vorzugsweise über wenigstens 60 % der Länge der Krümmung (11) erstreckt.

10. Kraftfahrzeug, das eine Kraftfahrzeug-EinspritzVorrichtung umfasst, die wenigstens ein Einspritzrohr (10) umfasst, das wenigstens eine Krümmung (11) aufweist, **dadurch gekennzeichnet, dass** es wenigstens eine Geräuschreduzierungsmuffe (1) umfasst, die an der Krümmung (11) montiert ist und wie in einem der Ansprüche 1 bis 9 beschaffen ist.
